# EUROPEAN PATENT APPLICATION

(11) **EP 2 799 984 A2**
(43) Date of publication of application: **05.11.2014**
(21) Application number: 14158200.7
(22) Date of filing: 06.03.2014
(51) Int. Cl.: G06F 9/44, G06F 3/048

(54) **Electronic device and icon arrangement method therefor**

(30) Priority: 29.04.2013 KR 20130047112
(71) Applicant: Samsung Electronics Co., Ltd., Suwon-si Gyeonggi-do 443-742 (KR)
(72) Inventor: Son, Dongil, 443-742 Gyeonggi-do (KR); Yeo, Jaeyung, 443-742 Gyeonggi-do (KR)
(74) Representative: Birchenough, Lewis

(57) **Abstract**

An electronic device and icon arrangement method for the same that arrange icons on the basis of dominant colors thereof. The icon arrangement method for the electronic device may include: determining a dominant color of at least one icon; storing information on the dominant color of each of the at least one icon in associated with the at least one icon respectively; and displaying the at least one icon in an arrangement based on the dominant color.

## Description

### TECHNICAL FIELD

The present disclosure relates to an electronic device and icon arrangement method for the same.

### BACKGROUND

Modern portable devices have evolved into integrated multimedia players supporting complicated functions related to photograph or video shooting, playback of music files and video files, gaming, broadcast reception, and wireless Internet access. Development of hardware and software technologies for portable devices has focused on enhancement of portability and convenience while satisfying user needs.

A user of a portable device needs a usage environment that enables the user to easily select a desired function among numerous functions provided by the portable device and rapidly execute the selected function. To cope with such need, a portable device may display icons on the home screen as shortcuts to invoke applications.

In most cases, icons are arranged in an alphabetical order, in order of last used date and time or according to user settings. However, as the user may fail to remember the initial alphabet or recently used date of a function or application, the user may have difficulty in locating an icon associated with a function to be executed.

Users tend to remember individual icons through characteristic colors or attributes thereof. However, schemes to arrange icons using such characteristic color or attribute information are not sufficiently developed.

### SUMMARY

To address the above-discussed deficiencies, it is a primary object to provide an electronic device and icon arrangement method therefor wherein icons are stored in conjunction with information on their dominant colors and are arranged and displayed according to their dominant colors.

Another aspect of the present disclosure is to provide an electronic device and icon arrangement method therefor wherein icons are classified into groups according to similarity of dominant colors and one or more icons belonging to a group are arranged and displayed.

Another aspect of the present disclosure is to provide an electronic device and icon arrangement method therefor wherein user input is detected on a color selection field and icons corresponding to the color selected by user input are displayed.

In accordance with an aspect of the present disclosure, a method for icon arrangement in an electronic device is provided. The method may include: determining a dominant color of at least one icon; storing information on the dominant color of each of the at least one icon in associated with the at least one icon respectively; and displaying the at least one icon in an arrangement based on the dominant color thereof.

In accordance with another aspect of the present disclosure, an electronic device supporting icon arrangement is provided. The electronic device may include: a storage unit to store at least one icon; a display unit to display the at least one icon; and a control unit for determining a dominant color of the at least one icon, controlling the storage unit to store information on the dominant color of each of the at least one icon in associated with the at least one icon respectively, and controlling the display unit to display the at least one icon in an arrangement based on the dominant color thereof.

In a feature of the present disclosure, the electronic device and icon arrangement method therefor arrange and display icons with reference to their dominant colors, enabling the user to find a desired icon in an intuitive and rapid manner.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts: The above and other aspects, features, and advantages of certain embodiments of the present disclosure will be more apparent from the following detailed description taken in conjunction with the accompanying drawings, in which:
FIG. 1 is a block diagram of an icon display device according to an embodiment of the present disclosure;
FIG. 2 is a flowchart of an icon storage procedure according to an embodiment of the present disclosure;
FIG. 3 illustrates an icon;
FIG. 4 illustrates an example of HTML color codes;
FIG. 5 illustrates a number groups of icons classified according to dominant colors;
FIG. 6 is a flowchart of an icon display procedure according to an embodiment of the present disclosure;
FIG. 7 illustrates display of icons;
FIG. 8 illustrates an example of icon display according to a display update request; and
FIG. 9 illustrates another example of icon display according to a display update request.

### DETAILED DESCRIPTION

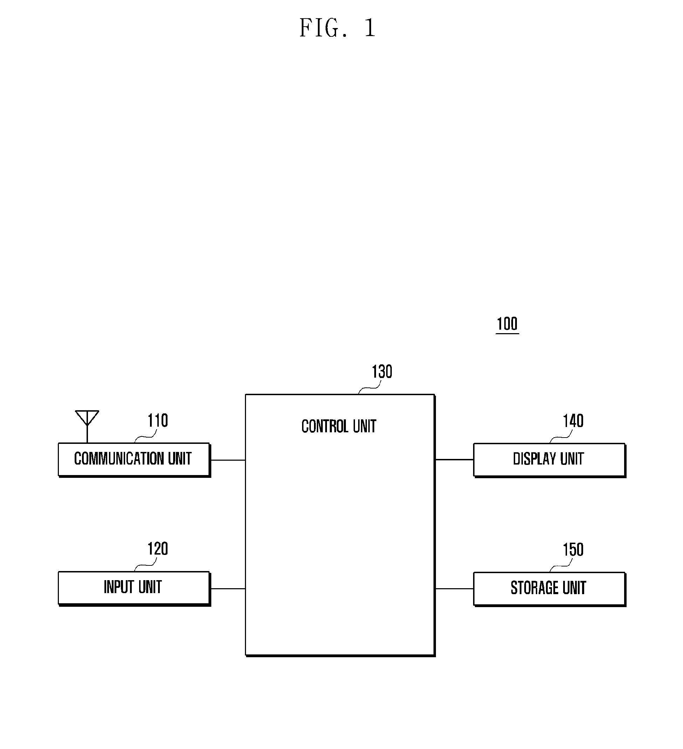

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Hereinafter, embodiments of the present disclosure are described in detail with reference to the accompanying drawings.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure.

It is to be understood that the singular forms "a," "an," and "the" include plural referents unless the context clearly dictates otherwise. Use of the terms "including", "comprising", "having" and variations thereof is meant to encompass the items listed thereafter and equivalents thereof as well as additional items.

Embodiments of the present disclosure may be applied to controlling any device capable of displaying icons.

The present disclosure may be applied to any electronic appliance capable of displaying icons, such as a smartphone, portable terminal, mobile terminal, personal digital assistant (PDA), portable multimedia player (PMP), note pad, WiBro terminal or tablet computer.

FIG. 1 is a block diagram of an icon display device according to an embodiment of the present disclosure.

Referring to FIG. 1, the icon display device 100 may include a communication unit 110, an input unit 120, a control unit 130, a display unit 140, and a storage unit 150.

The communication unit 110 communicates data with an external entity. The communication unit 110 may include a transmitter for upconverting the frequency of a signal to be transmitted and amplifying the signal, and a receiver for low-noise amplifying a received signal and downconverting the frequency of the received signal. When optical transmission is used for communication, the communication unit 110 may include an optical sensor, an infrared sensor or the like.

In particular, the communication unit 110 may download programs, applications and service related files from an external server under control of the control unit 130. Here, the communication unit 110 may also download icons together with programs, applications and service related files. The downloaded programs, applications, service related files and associated icons may be temporarily or semi-permanently stored in the storage unit 150.

The input unit 120 senses user input and sends an input signal corresponding to the user input to the control unit 130. The input unit 120 may include a keypad, dome switch, touchpad (resistive/capacitive), jog wheel, jog switch, finger mouse, wheel and the like.

The input unit 120 may be configured to include a touch sensor, proximity sensor, electromagnetic sensor, pressure sensor and the like. The input unit 120 may sense direct contact or proximity input through sensors. The input unit 120 may include an input pad composed of a pad and a sensor in the form of a film or panel on the panel. For example, the input unit 120 may include an input pad using an electromagnetic sensor on the basis of electromagnetic resonance (EMR) or electromagnetic interference (EMI).

The input unit 110 and the display unit 140 (described later) may be combined into a layered structure to form a touchscreen. For example, the input unit 110 may include an input pad having a touch sensor, and a touchscreen panel (TSP) coupled with the display unit 140. The input unit 110 and the display unit 140 combined into a layered structure may be referred to as a touchscreen.

The control unit 130 may control overall operation of the icon display device 100 and individual components thereof. For example, the control unit 130 may control the storage unit 150 to store icons together with dominant color information and control the display unit 140 to arrange and display icons according to their dominant colors.

The control unit 130 may form groups of icons with similar dominant colors and control the display unit 140 to arrange and display one or more icons belonging to a particular group.

The control unit 130 may detect user input on a color selection field and control the display unit 140 to arrange and display one or more icons belonging to an icon group corresponding to the selected color.

Operations of the control unit 130 are described in more detail later with reference to the drawings.

The display unit 140 displays or outputs information processed in the icon display device 100. For example, the control unit 130 may output information regarding a currently active application, program, or service through a user interface (UI) or graphical user interface (GUI).

The display unit 140 may be realized using a touchscreen. The touchscreen may support not only a function to display information but also a function to accept user input for displayed information.

The touchscreen may include a touch panel attached on an image display device through an adhesive layer. The image display device is an image output device based on liquid crystal display (LCD), plasma display panel (PDP), electroluminescent display (ELD) or cathode ray tube (CRT). The touch panel senses coordinates of a touch with a finger or object. The touch panel may be of various types such as resistive type, capacitive type, electromagnetic type, surface acoustic wave (SAW) type, and infrared type. When the touch panel is of capacitive type, the touch panel may sense input by not only a human body but also an electronic pen containing a conductive material or coil causing electrostatic induction. The touchscreen may also sense proximity input within a preset distance according to design.

In one embodiment, the display unit 140 may arrange and display one or more icons according to dominant colors under control of the control unit 130.

Among icon groups classified according to dominant colors, the display unit 140 may display one or more icons belonging to an icon group selected according to a preset criterion. Here, the display unit 140 may display a color selection field together with one or more icons.

The storage unit 150 may store programs or commands for the icon display device 100. The control unit 130 may execute programs or commands stored in the storage unit 150.

The storage unit 150 may include one or more of various types of storage media, such as a flash memory, hard disk, multimedia or other memory card (micro SD or XD), random access memory (RAM), static random access memory (SRAM), read only memory (ROM), programmable read-only memory (PROM), electrically erasable programmable read-only memory (EEPROM), magnetic memory, magnetic disk, and optical disc.

In one embodiment, the storage unit 150 may store one or more icons. The storage unit 150 may store icons so that the icons are associated with their dominant colors under control of the control unit 130. In addition, the control unit 130 may store information on icon groups classified according to a preset criterion, and store icons so that the icons are associated with information on the icon groups.

As the components of the icon display device 100 shown in FIG. 1 are nonessential, a new component may be added or an existing component may be omitted or replaced.

Next, storage of icons together with their dominant colors is described first prior to icon arrangement.

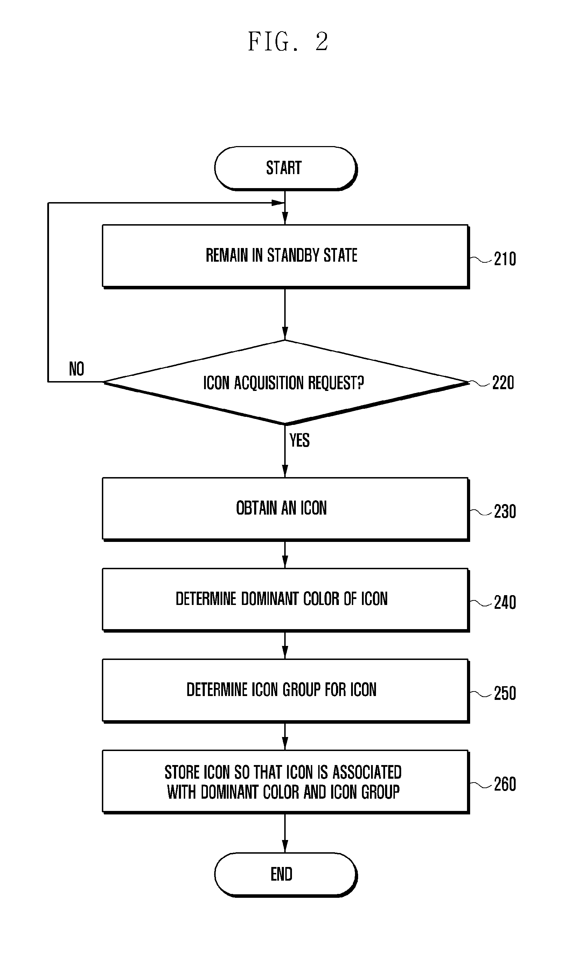

FIG. 2 is a flowchart of an icon storage procedure according to an embodiment of the present disclosure.

Referring to FIG. 2, at operation 210, the control unit 130 remains in a standby state.

In the standby state, the control unit 130 of the icon display device 100 may operate in a lock mode or wait mode. The control unit 130 may also perform an application, program or service related operation in the standby state. The control unit 130 may control the display unit 140 to display a lock screen, an idle screen, or a screen of an executed application in the standby state.

At operation 220, the control unit 130 checks whether an icon acquisition request is generated.

The control unit 130 may examine generation of an icon acquisition request through the input unit 120. An icon acquisition request may be generated by a user input, system, program, application or service.

The icon acquisition request may correspond to a download request for an application. That is, the icon acquisition request may be a request for downloading an application together with an icon therefor.

The icon acquisition request may also correspond to a creation request for a shortcut or an edit request for the standby screen.

If an icon acquisition request is not generated, the control unit 130 returns to operation 210 and remains in the standby state.

If an icon acquisition request is generated, the control unit 130 proceeds to operation 230 at which the control unit 130 obtains an icon.

The control unit 130 may obtain an icon according to a user request. For example, the control unit 130 may download an icon from an external entity through the communication unit 110. The control unit 130 may download a requested application together with an icon. The control unit 130 may also retrieve an icon from the storage unit 150 according to a user request.

An icon may be an image file with an extension such as png, tif, jpg, jpeg, bmp or ico.

At operation 240, the control unit 130 determines the dominant color of the icon.

The control unit 130 may analyze colors of the icon and determine the most frequently used color in the icon to be the dominant color of the icon. The control unit 130 may use a variety of algorithms to determine the dominant color.

For example, the control unit 130 may examine colors of pixels in an icon image file, and determine the color used in the largest number of pixels to be the dominant color of the icon.

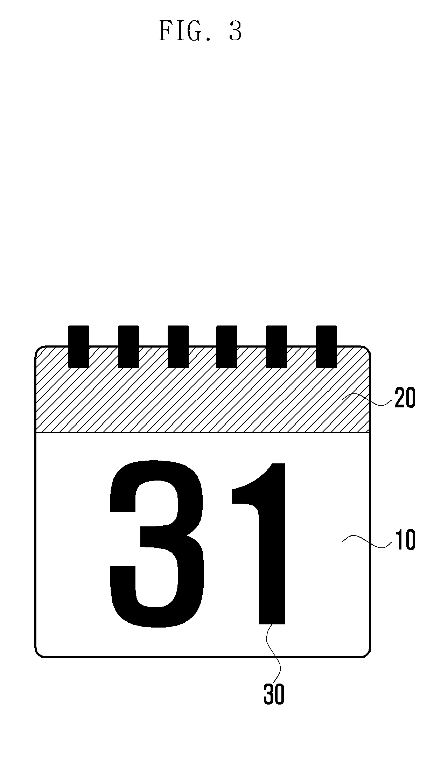

FIG. 3 illustrates an icon. The icon in FIG. 3 may have a first color 10, a second color 20, and a third color 30. The control unit 130 may examine colors of pixels in the icon and count the number of pixels using the first color 10, second color 20 and third color 30, respectively. It can be seen from FIG. 3 that the first color 10 is used in the largest region, i.e., in the largest number of pixels. Hence, after color analysis, the control unit 130 may determine the first color 10 used in the largest number of pixels to be the dominant color of the icon.

In one embodiment, when an icon contains text, the control unit 130 may determine the dominant color of the icon on the basis of the color of the text. That is, the control unit 130 may extract text from an icon using various character recognition algorithms such as optical character recognition (OCR). The control unit 130 may examine colors of the extracted text to determine the dominant color. Here, the control unit 130 may examine colors of pixels forming the text, and determine the color used in the largest number of pixels forming the text to be the dominant color of the icon. That is, the control unit 130 may determine the dominant color of the text to be the dominant color of the icon.

The control unit 130 may extract text "31" from the icon in FIG. 3. The control unit 130 may examine colors used in the text "31" and determine the third color 30 to be the dominant color of the icon according to color analysis of the text.

In one embodiment, the control unit 130 may examine colors used in a specific region of an icon and determine the dominant color of the icon according to color analysis of the region. That is, the control unit 130 may select a region of the icon for color analysis. For example, a central region, central image region, or border region of an icon may be selected. An internal region demarcated by a closed curve and forming a character or emoticon may also be selected. The control unit 130 may examine individual pixels to identify line segments. When the line segments forms a closed curve, the control unit 130 may select the region within the closed curve for color analysis.

The control unit 130 may examine colors used in the selected region of the icon and determine the color used in the largest number of pixels forming the region to be the dominant color of the icon. That is, the control unit 130 may determine the dominant color of a selected region to be the dominant color of the icon.

In the above description, several schemes to determine the dominant color of an icon are depicted. However, the present disclosure is not limited thereto. That is, the dominant color of an icon may be determined using various other schemes.

The control unit 130 may represent the dominant color as a color code value. For example, the control unit 130 may represent the dominant color as a RGB value, HSB value, CMYK value, HTML color code or ASCII value.

Thereafter, at operation 250, the control unit 130 determines an icon group for the icon on the basis of the dominant color.

Icon groups may be groups of icons classified according to dominant colors and preset criteria. For example, an icon group may be a set of icons with similar dominant colors. Similarity between dominant colors may be defined by a preset range of color values in a given color model.

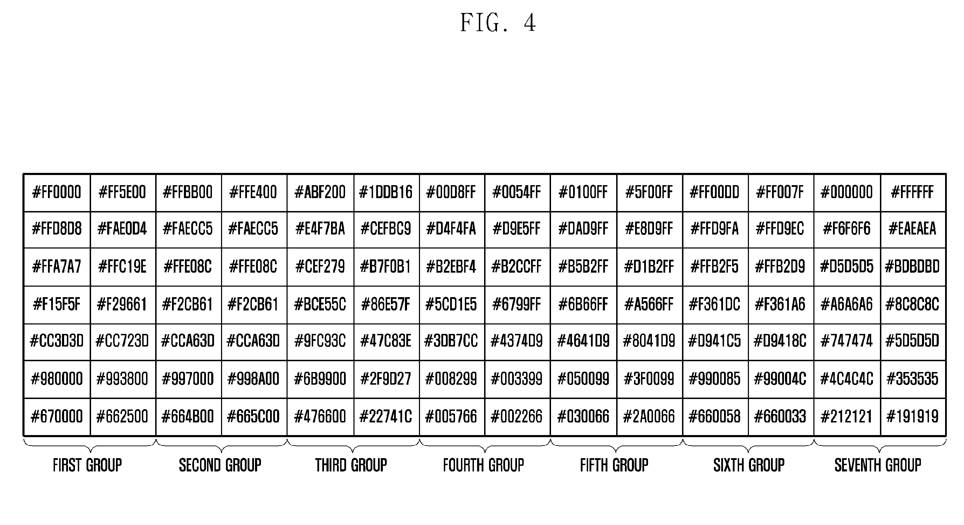

More specifically, the control unit 130 may represent dominant colors of icons as HTML color codes shown in FIG. 4. The control unit 130 may select an HTML color code corresponding to the dominant color of an icon. In the HTML color codes in FIG. 4, for a given row, columns indicate red color, scarlet color, orange color, yellow color, yellowish green color, green color, sky blue color, blue color, indigo blue color, violet color, purple color, black color, and white color. For a given column, rows indicate colors varying in saturation levels.

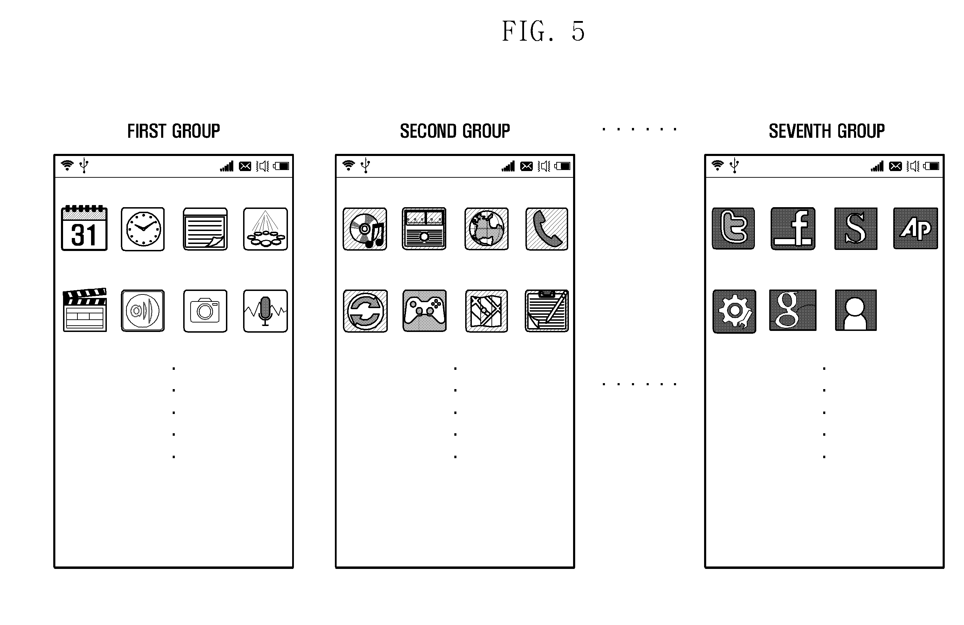

The control unit 130 may regards adjacent two columns in the HTML color codes in FIG. 4 as similarity ranges. The control unit 130 may determine that icons whose dominant colors correspond to color codes within the same similarity range belong to the same icon group. For example, referring to FIG. 4, assuming that the first and second columns (red colors and scarlet colors) are within the same similarity range, when the dominant color of an icon corresponds to a color code of the first and second columns, the control unit 130 may determine that the icon belongs to the first icon group. As another example, assuming that the third and fourth columns (orange colors and yellow colors) are within the same similarity range, when the dominant color of an icon corresponds to a color code of the third and fourth columns, the control unit 130 may determine that the icon belongs to the second icon group. In FIG. 5, icons are classified into seven icon groups according to their dominant colors.

To deal with a case wherein it is not possible to determine the dominant color of an icon (e.g. use of too many colors or presence of two or more dominant colors), the control unit 130 may specify a separate icon group of icons whose dominant colors cannot be determined.

In the above description, several examples for determining an icon group are depicted. However, the present disclosure is not limited thereto. That is, icon groups may be determined using various other schemes.

The control unit 130 may assign separate indexes to the icon groups. The control unit 130 may represent an icon group to which an icon is determined to belong as an index.

After icon group determination, at operation 260, the control unit 130 stores the icon so that the icon is associated with the dominant color/icon group. The control unit 130 stores the icon in the storage unit 150 so that the icon is associated with at least one of the dominant color and the icon group.

Next, a description is given of arrangement and display of icons stored in association with dominant colors.

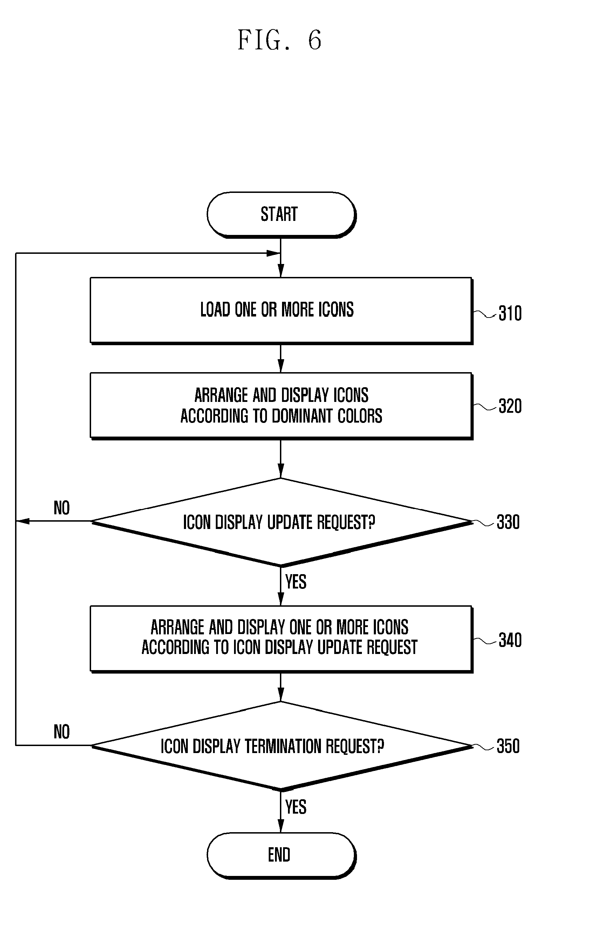

FIG. 6 is a flowchart of an icon display procedure according to an embodiment of the present disclosure.

Referring to FIG. 6, at operation 310, the control unit 130 loads one or more icons.

The control unit 130 may load icons stored in the storage unit 150. The control unit 130 may load icons together with dominant color information and icon group information.

At operation 320, the control unit 130 arranges and displays the icons according to their dominant colors.

The control unit 130 may control the display unit 140 to arrange and display icons according to dominant colors. For example, when the HTML color codes are used to represent dominant colors, the control unit 130 may arrange icons in order of HTML color codes of the dominant colors.

Before arranging icons based on dominant colors, the control unit 130 may check whether a color-based icon arrangement mode is configured. The color-based icon arrangement mode may be set by default or the user, and a setting option thereon may be stored in the storage unit 150. When the color-based icon arrangement mode is configured, the control unit 130 may arrange and display icons in accordance with their dominant colors.

In one embodiment, the control unit 130 may classify icons into icon groups and control the display unit 140 to display icons on a group basis. Specifically, the control unit 130 may classify icons into icon groups according to their dominant colors and a preset criterion. The control unit 130 may control the display unit 140 to arrange and display one or more icons for each icon group. For example, in FIG. 5, icons are classified into seven icon groups, the first to seventh icon groups are arranged in sequence, and one or more icons are displayed for each icon group.

In one embodiment, the control unit 130 may display one or more icons belonging to one of the icon groups on the screen. Specifically, the control unit 130 may demarcate multiple display regions on the screen, and arrange one or more icons belonging to one icon group on one display region. The display regions may be composed of one or more layers and may correspond to multiple pages of an idle screen or wallpaper. The control unit 130 may display one of the multiple display regions on the screen to thereby display one or more icons belonging to one icon group.

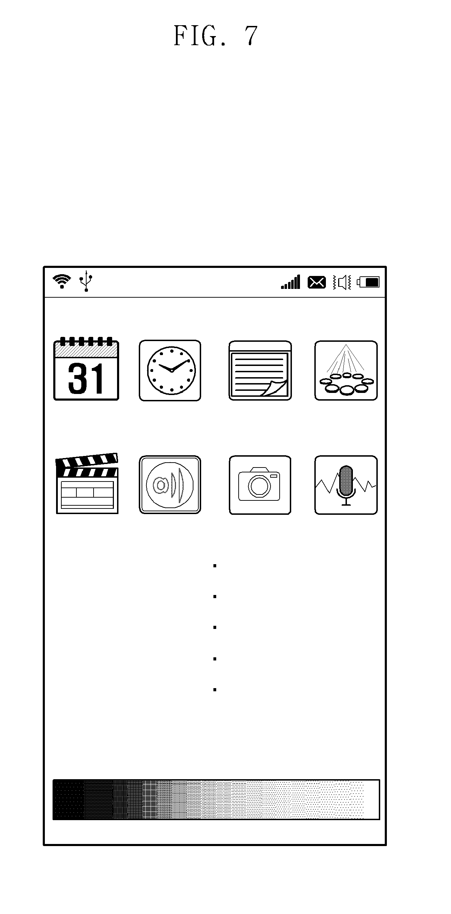

Referring to FIG. 7, after classifying icons into seven icon groups according to their dominant colors as shown in FIG. 5, the control unit 130 may display one or more icons belonging to the first icon group.

The control unit 130 may display a color selection field together with one or more icons. The color selection field may be composed of color indexes, color palette, and icons. For example, the color selection field may be presented as a color slide bar as shown in FIG. 7. The color selection field enables the user to select a dominant color for a desired icon. That is, for an icon, the user may select a dominant color, which is more readily recognizable than the application name or icon position, from the color selection field. Hence, the user may find a desired icon in an easy and convenient manner.

In the above description, several schemes for icon display are illustrated. However, the present disclosure is not limited thereto. Various other schemes for arranging and displaying icons based on dominant colors may be utilized in the present disclosure.

Thereafter, at operation 330, the control unit 130 checks whether an icon display update request is generated.

An icon display update request may be generated by user input.

In one embodiment, when multiple display regions are demarcated on the screen and one or more icons are output on one of the display regions, the icon display update request may correspond to a display region move request. When the display regions correspond to pages of the standby screen or wallpaper, the icon display update request may correspond to a page move request.

In one embodiment, when one or more icons are displayed together with a color selection field, the icon display update request may correspond to user input on the color selection field.

If an icon display update request is generated at operation 330, the control unit 130 proceeds to operation 340 at which the control unit 130 arranges and displays one or more icons according to the icon display update request.

When the icon display update request corresponds to a display region move request or page move request, the control unit 130 may display a display region or page corresponding to a direction or position indicated by the icon display update request. Here, the control unit 130 may display one or more icons arranged in the new display region or page or display an icon group of one or more icons arranged in the new display region or page on the basis of dominant colors.

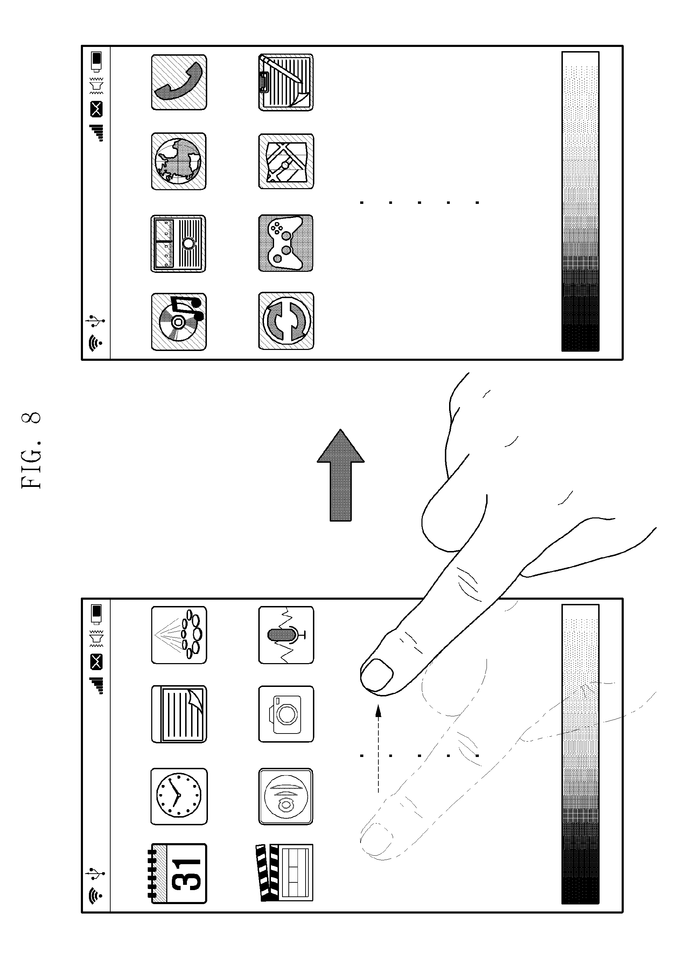

Referring to FIG. 8, upon detection of a drag gesture as a display region move request in a state wherein a first icon group is displayed in one of the display regions, the control unit 130 may control the display unit 140 to output a display region corresponding to the direction of the drag gesture and to display a second icon group arranged in the display region.

When the icon display update request is user input on the color selection field, the control unit 130 may identify the color indicated by the user input, select one or more icons corresponding to the color, and display the selected icons. The control unit 130 may also select an icon group containing one or more icons corresponding to the color and display one or more icons belonging to the icon group.

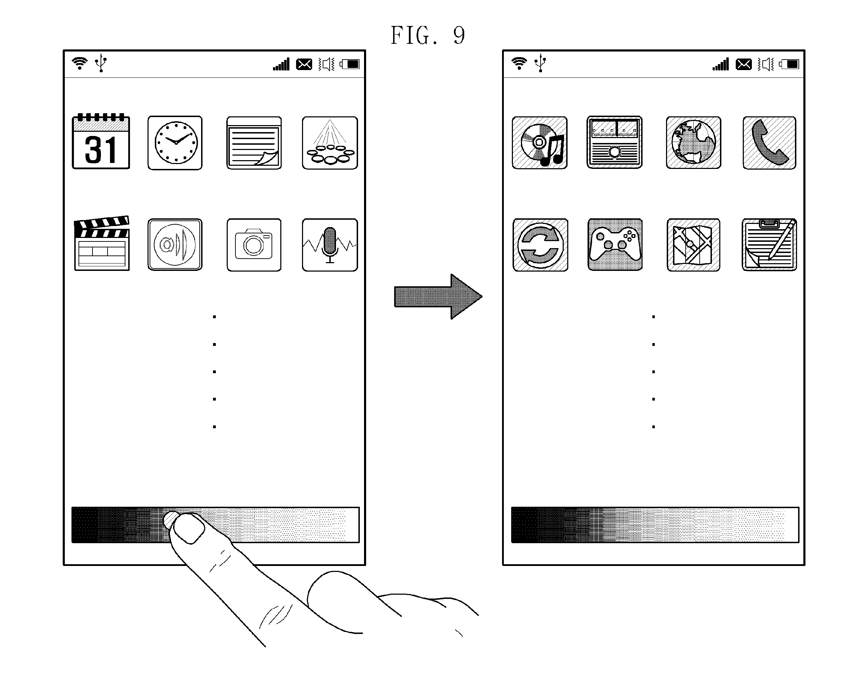

Referring to FIG. 9, in a state wherein one or more icons belonging to the first icon group and a color slide bar are displayed, upon detection of user input at a portion of the color slide bar, the control unit 130 may identify the color indicated by the user input and select at least one icon or an icon group whose dominant color matches the identified color. The control unit 130 may control the display unit 140 to display the selected at least one icon.

If an icon display update request is not generated at operation 330, the control unit 130 returns to operation 310 and may repeat the above procedure. When a new icon is obtained and the dominant color and icon group for the new icon are identified, the control unit 130 may update icon information and icon group information stored in the storage unit 150. The control unit 130 may rearrange and display one or more icons according to the updated information.

Thereafter, at operation 350, the control unit 130 checks whether a display termination request is generated.

The display termination request may be generated by turning off of the display unit 140, entering a power save mode, or turning off of the icon display device 100.

If a display termination request is not generated, the control unit 130 returns to operation 310 and may repeat the above procedure. When a new icon is obtained and the dominant color and icon group for the new icon are identified, the control unit 130 may update icon information and icon group information stored in the storage unit 150. The control unit 130 may rearrange and display one or more icons according to the updated information.

If a display termination request is generated, the control unit 130 ends display operation of the present disclosure.

In the above description, several examples of icon arrangement based on dominant colors are described. However, the present disclosure is not limited thereto. That is, icons may be arranged on the basis of other criteria.

Hereinabove, embodiments of the present disclosure have been described with reference to the accompanying drawings. Specific terms or words used in the description should be construed in accordance with the spirit of the present disclosure without limiting the subject matter thereof. Although the present disclosure has been described with an exemplary embodiment, various changes and modifications may be suggested to one skilled in the art. It is intended that the present disclosure encompass such changes and modifications as fall within the scope of the appended claims.

## Claims

1. A method for icon arrangement in an electronic device, the method comprising:
determining a dominant color of at least one icon;
storing information about the dominant color of each of the at least one icon in association with the at least one icon, respectively; and
displaying the at least one icon in an arrangement based on the dominant color.

2. The method of claim 1, wherein determining the dominant color comprises:
identifying a color of each pixel of an icon; and
determining a color used in a largest number of pixels as the dominant color.

3. The method of claim 1, wherein determining the dominant color comprises:
extracting recognizable text from an icon; and
determining a color used in the extracted recognizable text as the dominant color.

4. The method of claim 1, wherein determining the dominant color comprises:
identifying colors of a selected region of an icon; and
determining a dominant color of the selected region as the dominant color.

5. The method of claim 1, wherein storing the information about the dominant color comprises storing a color code corresponding to the dominant color of each of the at least one icon in association with the at least one icon, respectively.

6. The method of claim 1, wherein storing the information about the dominant color comprises:
identifying an icon group corresponding to the dominant color, wherein the icon group includes one or more icons classified according to the dominant color; and
storing information corresponding to the icon group in association with the icon group.

7. The method of claim 1, wherein displaying the at least one icons comprises:
classifying the at least one icon into one or more icon groups based on the dominant color of each of the at least one icon; and
displaying one or more icons belonging to a first icon group of the one or more icon groups in an arrangement.

8. The method of claim 7, further comprising displaying, upon detection of user input, one or more icons belonging to a second icon group of the one or more icon groups in an arrangement.

9. The method of claim 7, wherein displaying the one or more icons comprises displaying a color selection field.

10. The method of claim 9, further comprising:
identifying, upon detection of user input on the color selection field, a color indicated by the user input;
selecting an icon group including at least one icon having a dominant color that matches the identified color; and
displaying one or more icons associated with the selected icon group in an arrangement.

11. An electronic device supporting icon arrangement, the electronic device comprising:
a storage unit configured to store at least one icon;
a display unit configured to display the at least one icon; and
a control unit configured to determine a dominant color of the at least one icon; control the storage unit to store information about the dominant color of each of the at least one icon in association with the at least one icon, respectively; and control the display unit to display the at least one icon in an arrangement based on the dominant color.

12. The electronic device of claim 11, wherein the control unit is configured to identify a color of each pixel of an icon and determine a color used in a largest number of pixels as the dominant color.

13. The electronic device of claim 11, wherein the control unit is configured to classify the at least one icon into one or more icon groups based on the dominant color of each of the at least one icon, and control the display unit to display one or more icons belonging to a first icon group of the one or more icon groups in an arrangement.

14. The electronic device of claim 13, further comprising:
an input unit configured to detect user input,
wherein the control unit is configured to control, upon detection of user input, the display unit to display one or more icons belonging to a second icon group the one or more icon groups in an arrangement.

15. The electronic device of claim 13, wherein the control unit is configured to control the display unit to display a color selection field, identify, upon detection of user input on the color selection field through the input unit, a color indicated by the user input, select an icon group including at least one icon having a dominant color that matches the identified color, and control the display unit to display one or more icons associated with the selected icon group in an arrangement.
